# EUROPEAN PATENT APPLICATION

(11) **EP 4 843 964 A1**
(43) Date of publication of application: **25.11.2026**
(21) Application number: 26180059.3
(22) Date of filing: 20.05.2026
(51) Int. Cl.: C02F 9/00, B09B 3/65, B09B 3/35, B09B 3/70, B09B 101/70, C02F 1/20, C02F 1/40, C02F 3/28, C02F 11/04, C02F 11/12, C02F 11/13, C02F 103/32

(54) **TWO STAGE SYSTEM FOR MAXIMIZING BIOGAS PRODUCTION AND MINIMIZING PROCESS WASTE EMISSION**

(30) Priority: 21.05.2025 KR 20250065876
(71) Applicant: Na, Min Soo, Hwaseong-si, Gyeonggi-do (KR)
(72) Inventor: Na, Min Soo, Hwaseong-si, Gyeonggi-do (KR)
(74) Representative: Marks & Clerk LLP

(57) **Abstract**

A system for maximizing biogas production and minimizing process waste emission by pluralization of important facilities. The system configures key facilities, such as an anaerobic digester, a dryer, and a deodorization boiler, as a two-stage system, and integrating these facilities in a coordinated manner. The system recycles and recovers, in processes, a dried material and condensate produced by the dryer, as well as digested slurry produced during digestion. Consequently, energy costs associated with increased biogas production are reduced and the external discharge of process waste is minimized, thereby reducing outsourcing costs.

## Description

### CROSS REFERENCE TO RELATED APPLICATION

This application claims priority from Korean Patent Application No. 10-2025-0065876, filed on May 21, 2025, which is hereby incorporated by reference for all purposes as if fully set forth herein.

### BACKGROUND

### Field

The disclosure relates to a system for maximizing biogas production and minimizing process waste emission by pluralization of important facilities, and more particularly, to a system for increasing the amount of biogas production and minimizing process waste by recycling, in a food waste treatment process, high-concentration organic wastewater, organic sludge, and the like generated during the process.

### Description

In general, recycling food waste into resources include reducing the volume of the food waste through processes, such as shredding, dewatering, and drying, and then reusing the food waste as compost or animal feed.

That is, because food waste contains a large amount of moisture and generates unpleasant odors due to decomposition, a widely implemented approach involves processing the food waste through drying and carbonization to form a solid material with an extremely low moisture content, which is then treated as compost, animal feed, solid fuel, or backfill material.

For example, a treatment system which is widely used includes: a dewatering operation of reducing the moisture content of food waste; a drying operation of further reducing the moisture content the dewatered food waste; a grinding operation of grinding the dried food waste; and an operation of removing metal contaminants and other foreign matter through screening before the material is used as fertilizer or the like.

However, such systems produce leachate and condensate during the dewatering and drying operations, requiring significant costs for the treatment thereof and contaminating the surrounding environment. Furthermore, such systems have the major drawback of high energy consumption because, for example, a heat source is essential for continuously heating the food waste during the drying operation.

Specifically, the process systems used in the equipment industry for drying pretreated sludge, such as that resulting from the shredding and dewatering of food waste, are energy-intensive, thereby requiring large amounts of heat and electricity. These high energy costs lead to increased production costs per unit, thereby placing a significant burden on business operations. Furthermore, there are financial disadvantages, such as the requirement to outsource the treatment of the majority of wastewater and waste produced during the process.

Methods are being developed to recycle biogas generated during the anaerobic digestion of food waste as fuel for gas generators or to supply the biogas to gas generators for use as electrical energy. However, these methods still produce residual waste that needs to be processed after recycling. Furthermore, because the dried material contains a high nitrogen content, it is insufficient for ensuring high-quality animal feed.

The information disclosed in the Background section is only provided for a better understanding of the background and should not be taken as an acknowledgment or any form of suggestion that this information forms prior art that would already be known to a person having ordinary skill in the art.

### Related Art Document

Patent Document 1: Korean Patent No. 10-1367745
Patent Document 2: Korean Patent No. 10-1467695
Patent Document 3: Korean Patent No. 10-1847082
Patent Document 4: Korean Patent No. 10-2648024

### BRIEF SUMMARY

The disclosure has been made in consideration of the aforementioned problems occurring in the related art, and an objective of the disclosure is to provide a novel system for maximizing biogas production and minimizing process waste emission by pluralization of important facilities. The novel system of the disclosure involves configuring key facilities, such as an anaerobic digester, a dryer, and a deodorization boiler, as a two-stage system, and integrating these facilities in a coordinated manner. The system recycles and recovers, in processes, a dried material and condensate produced by the dryer, as well as digested slurry produced during digestion. Consequently, energy costs associated with increased biogas production can be reduced and the external discharge of process waste can be minimized, thereby reducing outsourcing costs.

The objective of the disclosure is not limited to the aforementioned description, and other objectives not explicitly disclosed herein will be clearly understood by a person having ordinary skill in the art from the description provided hereinafter.

In order to realize at least one of the above objectives, the disclosure may provide two aspects of systems for maximizing biogas production and minimizing process waste emission by pluralization of important facilities.

In an aspect, provided is a system for maximizing biogas production and minimizing process waste emission by pluralization of important facilities, the system including: a shredder for shredding food waste; a dewatering device for dewatering the food waste; a food waste pretreatment part including an oil remover for removing oil from the food waste; a first drier for drying organic sludge discharged from the dewatering device of the food waste pretreatment part; a first digestion chamber for performing anaerobic digestion on wastewater discharged from the oil remover of the food waste pretreatment part and digested sludge circulating in a first aging chamber to generate biogas; a second digestion chamber for performing anaerobic digestion on a dried material discharged from the first drier and the digested sludge circulating in the first aging chamber to generate biogas; the first aging chamber for aging the digested sludge discharged from the first digestion chamber while circulating the digested sludge to and from the first digestion chamber; a second aging chamber for aging the digested sludge discharged from the second digestion chamber while circulating the digested sludge to and from the second digestion chamber; an ammonia stripping reaction chamber for performing ammonia stripping treatment on the digested sludge discharged from the first aging chamber by adding an alkali agent so that the pH of the digested sludge is raised to 11 or higher; a second drier for drying the digested sludge discharged from the ammonia stripping reaction chamber; a first deodorization boiler for incinerating waste gas discharged from the first drier; and a second deodorization boiler for incinerating waste gas discharged from the second drier.

The system for maximizing biogas production and minimizing process waste emission by pluralization of important facilities may further include a gas holder for collecting and pretreating the biogas generated from the first digestion chamber and the biogas generated from the second digestion chamber and supplying the pretreated biogas to the first deodorization boiler and the second deodorization boiler as fuel.

The first drier and the second drier may receive steam from the first deodorization boiler and the second deodorization boiler, respectively, to use the steam as a heat source.

the ammonia stripping reaction chamber may receive a portion of the digestion-treated water discharged from the first aging chamber and the second aging chamber, mix the digested sludge and the received portion of the digestion-treated water, and perform ammonia stripping on the mixture.

In an example embodiment, the second digestion chamber may receive a portion of condensed wastewater generated from the waste gas discharged from the first drier and the second drier, mix the portion of condensed wastewater with the dried material, and perform anaerobic digestion on the mixture.

The system for maximizing biogas production and minimizing process waste emission by pluralization of important facilities may further include: a grinder for grinding the dried material discharged from the first drier; a sorter for sorting the dried material; and a mixing chamber for mixing the dried material discharged from the sorter with the condensed wastewater discharged from a condenser and transferring the mixture to the second digestion chamber.

In another aspect, provided is a system for maximizing biogas production and minimizing process waste emission by pluralization of important facilities, the system including: a shredder for shredding food waste; a dewatering device for dewatering the food waste; a food waste pretreatment part including an oil remover for removing oil from the food waste; a first drier for drying organic sludge discharged from the dewatering device of the food waste pretreatment part; a first digestion chamber for performing anaerobic digestion on wastewater discharged from the oil remover of the food waste pretreatment part and digested sludge circulating in a first aging chamber to generate biogas; a second digestion chamber for performing anaerobic digestion on a dried material discharged from a second aging chamber and the digested sludge circulating in the second aging chamber to generate biogas; a first aging chamber for aging the digested sludge discharged from the first digestion chamber while circulating the digested sludge to and from the first digestion chamber; the second aging chamber for aging the digested sludge discharged from the second digestion chamber while circulating the digested sludge to and from the second digestion chamber; an ammonia stripping reaction chamber for performing ammonia stripping treatment on the digested sludge discharged from the first aging chamber by adding an alkali agent to raise a pH of the digested sludge to 11 or higher; a second drier for drying the digested sludge discharged from the ammonia stripping reaction chamber; a first deodorization boiler for incinerating waste gas discharged from the first drier; a second deodorization boiler for incinerating waste gas discharged from the second drier; a grinder for grinding the dried material discharged from the first drier; a sorter for sorting the dried material; and a mixing chamber for mixing the dried material discharged from the sorter with the condensed wastewater discharged from a condenser and transferring the mixture to the second digestion chamber.

The system for maximizing biogas production and minimizing process waste emission by pluralization of important facilities may further include a gas holder for collecting and pretreating the biogas generated from the first digestion chamber and the biogas generated from the second digestion chamber and supplying the pretreated biogas to the first deodorization boiler and the second deodorization boiler as fuel.

The first drier and the second drier may receive steam from the first deodorization boiler and the second deodorization boiler, respectively, to use the steam as a heat source.

The ammonia stripping reaction chamber may receive a portion of the digestion-treated water discharged from the first aging chamber, mix the digested sludge and the received portion of the digestion-treated water, and perform ammonia stripping on the mixture.

In an example embodiment, the second digestion chamber may receive a portion of condensed wastewater generated from the waste gas discharged from the first drier and the second drier, mix the portion of condensed wastewater with the dried material, and perform anaerobic digestion on the mixture.

In an example embodiment, the system for maximizing biogas production and minimizing process waste emission by pluralization of important facilities may further include: a grinder for grinding the dried material discharged from the first drier; a sorter for sorting the dried material; and a mixing chamber for mixing the dried material discharged from the sorter with the condensed wastewater discharged from a condenser and the digested sludge discharged from the second aging chamber and transferring the mixture to the second digestion chamber

The system for maximizing biogas production and minimizing process waste emission by pluralization of important facilities may further include the dewatering device and the first drier and configured to perform ammonia stripping treatment on the organic sludge discharged from the dewatering device by adding an organic sludge so that the pH of the organic sludge is raised to 11 or higher.

The system for maximizing biogas production and minimizing process waste emission by pluralization of important facilities according to the disclosure has the following effects:
1) Implementing a system that recycles high-concentration organic wastewater and organic sludge in processes can increase biogas production. The biogas produced in this manner can be used as fuel to power the process facilities, thereby reducing energy costs. In addition, minimizing the waste and condensate discharged from the treatment process can reduce costs associated with external waste disposal.
2) The system can generate corporate profits by producing and selling high-quality compost containing low-nitrogen compost.
3) The production and use of biogas, which is a renewable energy source, can improve air quality by reducing greenhouse gas emissions and air pollutant emissions.

The methods and apparatuses of the disclosure have other features and advantages that will be apparent from, or which are set forth in greater detail in the accompanying drawings, which are incorporated herein, and in the following Detailed Description of the Invention, which together serve to explain certain principles of the disclosure.

### DESCRIPTION OF DRAWINGS

The above and other objectives, features, and advantages of the disclosure will be more clearly understood from the following detailed description, taken in conjunction with the accompanying drawings, in which:
FIG. 1 is a schematic view illustrating a system for maximizing biogas production and minimizing process waste emission by pluralization of important facilities according to an embodiment of the disclosure; and
FIG. 2 is a schematic view illustrating a system for maximizing biogas production and minimizing process waste emission by pluralization of important facilities according to another embodiment of the disclosure.

### DETAILED DESCRIPTION

Hereinafter, the disclosure will be described in detail with reference to the accompanying drawings.

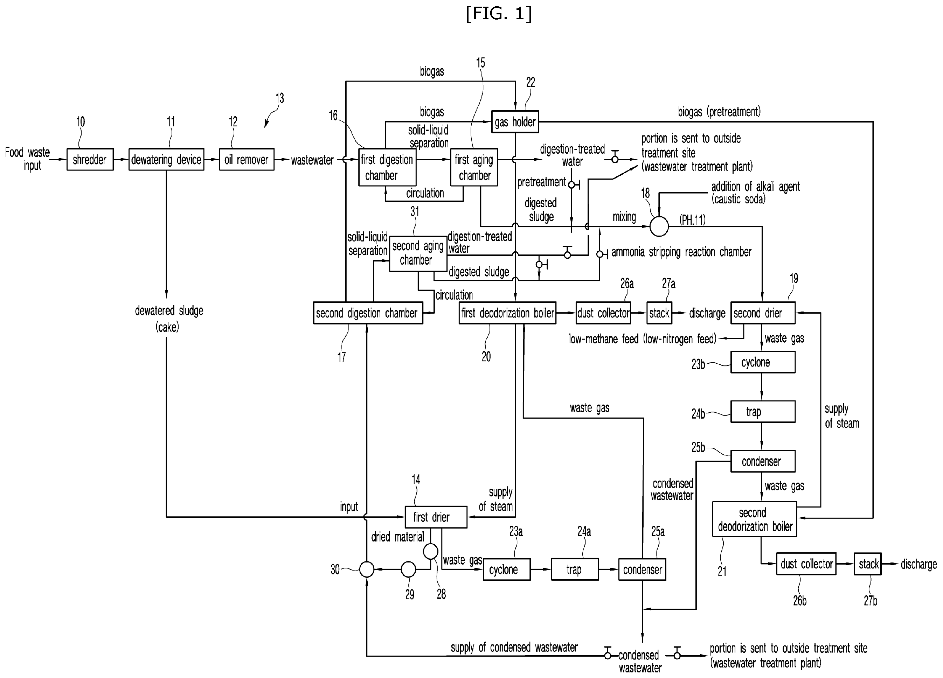

FIG. 1 is a schematic view illustrating a system for maximizing biogas production and minimizing process waste emission by pluralization of important facilities according to an embodiment of the disclosure.

As shown in FIG. 1, the system for maximizing biogas production and minimizing process waste emission by pluralization of important facilities includes a food waste pretreatment part 13 as means for pretreating food waste.

The food waste pretreatment part 13 includes a shredder 10, a dewatering device 11, an oil remover 12, and the like, which are arranged sequentially to treat food waste.

Here, the shredder 10 serves to shred food waste that has clumped together into lumps or similar forms, the dewatering device 11 serves to remove moisture from the food waste, and the oil remover 12 is a type of three-phase separator which serves to remove oil from the food waste.

Therefore, food waste brought in from outside passes sequentially through the shredder 10, the dewatering device 11, and the oil remover 12. Through this process, the food waste may be finely ground while the moisture and oil are removed from the food waste.

Organic sludge discharged from the dewatering device 11 is sent to a first drier 14 to be dried, while the wastewater discharged from the dewatering device 11 passes through the oil remover 12 and is then sent to a first digestion chamber 16 to be anaerobically digested.

Furthermore, the system for maximizing biogas production and minimizing process waste emission by pluralization of important facilities includes the first dryer 14 as means for drying the organic sludge discharged from the dewatering device 11 of the food waste pretreatment part 13.

The first dryer 14 serves to dry the organic sludge discharged from the dewatering device 11. The dried material from the first dryer 14 is then sent to a second digestion chamber 17, in which the dried material may be used for biogas production.

Furthermore, the exhaust gas discharged from the first drier 14, i.e. exhaust gas containing high-concentration N₂ gas, passes through a cyclone 23a and a trap 24a. During this process, impurities and oil in the exhaust gas are filtered out. The exhaust gas that has passed through the cyclone 23a and the trap 24a is sent to a condenser 25a to be cooled, sent to a first deodorization boiler 20 for deodorization treatment, and finally released into the atmosphere through a dust collector 26a, a stack 27a, and the like.

Here, a portion of the condensed wastewater discharged from the condenser 25a is sent to an external treatment site, while the remaining condensed wastewater is mixed with the dried material discharged from first dryer 14 and then sent together to the second digestion chamber 17 for treatment.

The system for maximizing biogas production and minimizing process waste emission by pluralization of important facilities further includes the first digestion chamber 16 as means for producing biogas by anaerobically digesting the wastewater discharged from the oil remover 12 of the food waste pretreatment part 13 and the digested sludge circulating in a first aging chamber 15.

The first digestion chamber 16 is a mesophilic digestion chamber in which the internal temperature is maintained at approximately 37°C to 42°C. In the first digestion chamber 16, both the digested sludge, which circulates between the first digestion chamber 16 and the first aging chamber 15, and the high-concentration organic wastewater, which is supplied from the oil remover 12 and from which oil has been removed, are anaerobically digested.

For example, when digested sludge and high-concentration organic wastewater are fed into the first digestion chamber 16, the digested sludge and the high-concentration organic wastewater remain within the digestion chamber for a selected period of time, for example, approximately 25 to 35 days, during which time the pH is maintained at approximately 7.0 to 7.6. Through this retention and fermentation process, the biogas generated accumulates in the top portion within the digestion chamber, the digestion-treated water accumulates in the upper layer of the water level within the chamber, and the heavy digested sludge accumulates in the lower layer within the chamber.

The biogas discharged from the first digestion chamber 16 is sent to the gas holder 22, while the digestion-treated water and digested sludge are each sent to the first aging chamber 15.

The system for maximizing biogas production and minimizing process waste emission by pluralization of important facilities further includes the second digestion chamber 17 as means for producing biogas by anaerobically digesting the dried material discharged from the first drier 14, the digested sludge circulating in the second aging chamber 31, and a portion of the condensed wastewater discharged from condensers 25a and 25b.

The second digestion chamber 17 is a mesophilic digestion chamber, the internal temperature of which is maintained at approximately 37°C to 42°C. In this second digestion chamber 17, the dried material supplied from the first drier 14, the digested sludge circulating between the second digestion chamber 17 and the second aging chamber 31, and the condensed wastewater discharged from the condensers are anaerobically digested together.

For example, when the dried material, digested sludge, and condensed wastewater are fed into the second digestion chamber 17, the mixture of dried material, digested sludge, and condensed wastewater remains within the digestion chamber for a specified period of time, such as 25 to 35 days, while the pH of the mixture is maintained at approximately 7.0 to 7.6. Through this retention and fermentation process, the biogas generated accumulates in the top portion within the digestion chamber, the digestion-treated water accumulates in the upper layer of the water level within the chamber, and the heavier digested sludge accumulates in the lower layer within the chamber.

Then, the biogas discharged from the second digestion chamber 17 is sent to the gas holder 22, while the digestion-treated water and digested sludge are finally sent to the second aging chamber 31.

In particular, when the dried material is supplied from the first drier 14, the second digestion chamber 17 also receives the condensed wastewater generated from the exhaust gas discharged from the first drier 14, i.e. condensed wastewater produced through the exhaust gas condensation process in the condenser 25a, and the condensed wastewater generated from the exhaust gas discharged from the second drier 19, i.e. condensed wastewater produced through the exhaust gas condensation process in the condenser 25b. A result, the second digestion chamber 17 may perform anaerobic digestion on the dried material and the condensed wastewater which are mixed together.

At this point, the condensed wastewater discharged from the two condensers 25a and 25b through the respective lines converges into a single line. This condensed wastewater is then split again, with a portion being supplied to the second digestion chamber 17, while the remainder is sent for treatment to a wastewater treatment plant, a wastewater treatment process, or the like.

In an example embodiment, the dried material supplied to the second digestion chamber 17, i.e., a dried material provided by the first dryer 14, undergoes grinding and screening, as well as mixing, in order to improve the efficiency of the digestion process before being sent to the second digestion chamber 17.

To this end, a grinder 28, a sorter 29, and a mixing chamber 30 are sequentially disposed on the dried material discharge line of the first drier 14, i.e., a line leading to the second digestion chamber 17. In this case, lines supplying the condensed wastewater produced through the exhaust gas condensation process in the condenser 25a and the condensed wastewater produced through the exhaust gas condensation process in the condenser 25b are connected to the mixing chamber 30, and the mixing chamber 30 is connected to the second digestion chamber 17.

Accordingly, the dried material discharged from the first drier 14 is ground to an appropriate size while passing through the grinder 28, sorted to an appropriate size while passing through the sorter 29, for example, a circular sorter, and then sent to the mixing chamber 30.

Thereafter, in the mixing chamber 30, the dried material transferred from sorter 29 and the condensed wastewater sent from condensers 25a and 25b are mixed. This mixture of dried material and condensed wastewater is then sent to the second digestion chamber 17 for anaerobic digestion. Consequently, because the dried material that has undergone the grinding and sorting processes is subjected to anaerobic digestion within the second digestion chamber 17, the efficiency of the digestion process may further be enhanced.

The system for maximizing biogas production and minimizing process waste emission by pluralization of important facilities includes the first aging chamber 15 and the second aging chamber 31 as means for aging the digested sludge discharged from the first digestion chamber 16 and the second digestion chamber 17 while circulating the digested sludge to and from the first digestion chamber 16 and the second digestion chamber 17, respectively.

The first aging chamber 15 and the second aging chamber 31 serve to retain the digested sludge, filtrate, and the like discharged from the first digestion chamber 16 and the second digestion chamber 17 for a selected period of time, thereby performing fermentation and aging as well as solid-liquid separation.

Furthermore, the digested sludge undergoes fermentation and aging processes while being continuously circulated between the first aging chamber 15 and the first digestion chamber 16 and between the second aging chamber 31 and the second digestion chamber 17 for a selected period of time. As a result, the repeated fermentation and aging processes may maximize biogas production.

The digested sludge discharged after the aging processes in the first aging chamber 15 and the second aging chamber 31 is sent to an ammonia stripping reaction chamber 18. In addition, a portion of the digestion-treated water discharged after the aging processes in the first aging chamber 15 and the second aging chamber 31 is sent to the ammonia stripping reaction chamber 18 for use, while the remainder is sent to a wastewater treatment plant or the like for treatment.

In addition, the system for maximizing biogas production and minimizing process waste emission by pluralization of important facilities includes the ammonia stripping reaction chamber 18 as means for performing ammonia stripping treatment on the digested sludge discharged from the first aging chamber 15 and the second aging chamber 31 in conjunction with the addition of an alkali agent to raise the pH to 11 or higher.

The ammonia stripping reaction chamber 18 serves to raise the pH of the digested sludge and the digestion-treated water, which are input together, to 11 or higher through the addition of an alkali agent and agitation.

To this end, the digested sludge and the digestion-treated water, together with an alkali agent (e.g., an alkali-based agent such as liquid caustic soda, an alkali metal compound, and an alkaline earth metal compound) having a concentration of about 1% to 5%, are input into the ammonia stripping reaction chamber 18. The mixture of digested sludge, digestion-treated water, and alkali agent input as above, i.e., a mixture with a pH of 11 or higher, undergoes dissolution, diffusion, and decomposition reactions in the ammonia stripping reaction chamber 18 before being sent to the second drier 19.

For example, in the ammonia stripping reaction chamber 18, a denitrification process is performed on the digested sludge, digestion-treated water, and alkali-based agent input thereinto.

Specifically, the digested sludge, digestion-treated water, and alkali-based agent are input into and mixed in the ammonia stripping reaction chamber 18. In this case, the internal conditions of the ammonia stripping reaction chamber 18 may be set to maintain not only high temperatures but also a strong alkaline state with a pH of 11 or higher.

Therefore, during the process of inputting the digested sludge and the digestion-treated water into the ammonia stripping reaction chamber 18, the alkali-based agent is input simultaneously. While the internal conditions of the ammonia stripping reaction chamber 18 are maintained at a selected temperature and a strong alkaline state with a pH of 11 or higher, a mixing process of inducing physical changes through continuous rotational agitation is performed. Consequently, the nitrogen content in the digested sludge and digestion-treated water are converted from the ammonium (NH₄+) ion state to ammonia (NH₃) in a short period of time through a degassing process, thereby reducing the total nitrogen content.

After the aging processes in the first aging chamber 15 and the second aging chamber 31, a portion of the digestion-treated water, excluding the portion sent to the ammonia stripping reaction chamber 18, may be sent to an external treatment site.

Here, the ammonia stripping process is a type of physicochemical method for removing nitrogen compounds from food waste, wastewater, ammonia, and a material containing large amounts of ammonium ions. The ammonia stripping process involves raising the pH to 11 or higher by inputting an alkali-based agent such as caustic soda and then maintaining a selected temperature, so that ammonia is reduced and degassed as nitrogen gas.

Furthermore, the system for maximizing biogas production and minimizing process waste emission by pluralization of important facilities includes the second dryer 19 as means for drying the digested sludge discharged from the ammonia stripping reaction chamber 18.

In this second drier 19, not only the drying process of the digested sludge but also the ammonia stripping reaction may continue, thereby enabling denitrification.

For example, a mixture of digested sludge, digestion-treated water, and alkali-based agent is input into the second drier 19, in which the drying conditions within the second drier 19 may maintained at a high temperature and in a strong alkaline state with a pH of 11 or higher.

Therefore, by performing the drying process of inducing physical changes by performing continuous rotary agitation drying while maintaining the internal drying conditions of the second dryer 19 at a strong alkaline state with a pH of 11 or higher, the total nitrogen substances contained in the dried digested sludge may be removed.

In this case, the ammonia (NH₃) removed from the dried material through the stripping process within the second drier 19 may be sent, together with the drier exhaust gas, to a second deodorization boiler 21 for treatment, and the dried material discharged from the second drier 19, which contains low-concentration total nitrogen substances, may be used as animal feed, compost, solid fuel, or the like.

Specifically, the denitrified dry material discharged from the second dryer 19 (e.g., organic dry feed containing low-concentration total nitrogen substances), i.e., low-methane feed (low-nitrogen feed), may undergo grinding and sorting processes before being sold as compost or solid fuel.

The exhaust gas discharged from the second drier 19, i.e., exhaust gas containing high-concentration N₂, passes through a cyclone 23b and a trap 24b, in which impurities and oil are filtered out from the exhaust gas. The exhaust gas that has passed through the cyclone 23b and the trap 24b is sent to the condenser 25b to be cooled, sent to the second deodorization boiler 21 to be deodorized, and then released into the atmosphere through a dust collector 26b and a stack 27b.

Furthermore, the system for maximizing biogas production and minimizing process waste emission by pluralization of important facilities includes the first deodorization boiler 20 and the second deodorization boiler 21 as means for incinerating waste gas containing malodorous gases.

The first extraction boiler 20 is disposed on the exhaust gas discharge line of the first drier 14 to incinerate the exhaust gas discharged from the first drier 14.

The second deodorization boiler 21 is disposed on the exhaust gas discharge line of the second drier 19 to incinerate the exhaust gas discharged from the second drier 19.

The exhaust gas incinerated in the first deodorization boiler 20 and the second deodorization boiler 21 is purified through the dust collectors 26a and 26b and the stacks 27a and 27b before being released into the atmosphere.

In an example embodiment, the disclosure provides a system able to use the biogas produced in the first digestion chamber 16 and the second digestion chamber 17 as fuel for operating the facilities.

To this end, gas transfer lines are connected to the first digestion chamber 16 and the first deodorization boiler 20 and to the second digestion chamber 17 and the second deodorization boiler 21, respectively, and a gas holder 22 is disposed on the lines connected in this manner.

Consequently, the biogas discharged from the first digestion chamber 16 and the second digestion chamber 17 is collected and pretreated in the gas holder 22, and then supplied to the first deodorization boiler 20 and the second deodorization boiler 21, respectively, to be used as fuel.

By using biogas produced in-house by the digestion chambers as fuel for facility operation, energy costs may be significantly reduced.

Furthermore, steam transfer lines are connected to the first deaeration boiler 20 and the first drier 14 and to the second deaeration boiler 21 and the second drier 19, respectively, and steam generated in the first dehumidification boiler 20 and the second dehumidification boiler 21 is supplied to the first drier 14 and the second drier 19 through the lines, respectively, to be used as a heat source for the driers.

Therefore, the overall food waste treatment process of the system for maximizing biogas production and minimizing process waste emission by pluralization of important facilities configured as above will be described as follows.

As the food waste passes sequentially through the shredder 10, the dewatering device 11, and the oil remover 12 in the food waste pretreatment part 13, the food waste is finely shredded, and moisture, oil, and other substances are removed from the food waste.

The organic sludge discharged from the dewatering device 11 is input into the first dryer 14 to be dried. The dried material is then input into the second digestion chamber 17 after being mixed with condensed wastewater. At the same time, the high-concentration wastewater discharged from the oil remover 12 is input into the first digestion chamber 16.

At this point, the exhaust gas discharged from the first dryer 14 is released into the atmosphere after odors and other contaminants have been removed in the first deodorization boiler 20.

In the first digestion chamber 16 and the second digestion chamber 17, biogas is produced through anaerobic digestion. This biogas is collected in the gas holder 22 and then supplied to the first deodorization boiler 20 and the second deodorization boiler 21 to be used as fuel. The digested sludge and the digestion-treated water discharged from the first digestion chamber 16 and the second digestion chamber 17 are aged in the first aging chamber 15 and the second aging chamber 31, respectively, and then input into the ammonia stripping reaction chamber 18.

In addition, the exhaust gas emitted from the second dryer 19 is released into the atmosphere after odors and other contaminants have been removed in the deodorizing boiler 19.

In the ammonia stripping reaction chamber 18, a mixture of digested sludge and digestion-treated water with minimized nitrogen content is produced through the ammonia stripping process. The mixture produced in this manner is input into the second drier 19 to be dried. The high-quality low-nitrogen dried material discharged from the second drier 19 is sold as animal feed, compost, or the like. In addition, the exhaust gas discharged from the second dryer 19 is released into the atmosphere after odors and other contaminants have been removed in the second deodorization boiler 21.

As described above, the biogas (methane) generated when high-concentration organic wastewater is input into and treated in the first digestion chamber 16 before being supplied as fuel to the first deodorization boiler 20 after pretreatment, and the steam generated in the first deodorization boiler 20 is supplied as a heat source to the first dryer 14 which dries the organic sludge.

The organic dried material discharged after dried in the first drier 14 is mixed at a selected ratio with the condensed wastewater generated during the condensation of exhaust gas from the first drier 14 and the second drier 19, and the resultant mixture is input into the second digestion chamber 17 to be anaerobically digested.

Furthermore, the biogas generated after digestion in the second digestion chamber 17 and the biogas generated after digestion in the first digestion chamber 16 are collected in the gas holder 22. The resultant biogas is pretreated and then used as fuel for the first deodorization boiler 20 and the second deodorization boiler 21. The remaining biogas may be processed to improve the quality and converted into city gas to be sold or supplied as fuel to a power generator to generate electricity, which may also be sold.

After the digestion-treated water discharged from the first digestion chamber 16 and the second digestion chamber 17 is subjected to solid-liquid separation in the first aging chamber 15 and the second aging chamber 31, the anaerobic digested sludge is returned to the first digestion chamber 16 and the second digestion chamber 17. The excess digested sludge enters the ammonia stripping reaction chamber 18 together with a selected proportion of the digestion-treated water. The resultant mixture is thoroughly agitated in alkaline conditions (pH 11 or higher) to degas ammonia (NH₃) gas and then input into and dried in the second drier 19.

The high-quality organic dried material discharged from the second dryer 19 is used as a compost raw material while containing low-nitrogen components. The condensed wastewater discharged during the exhaust gas condensation process of the second dryer 19, i.e. condensed wastewater containing low-nitrogen components, is resupplied as mixing water to the first dryer 14.

Furthermore, the waste gas generated in the second dryer 19 is incinerated in the second deodorization boiler 21 to remove odorous gases, and the steam generated using biogas fuel is supplied as a heat source to the second dryer 19.

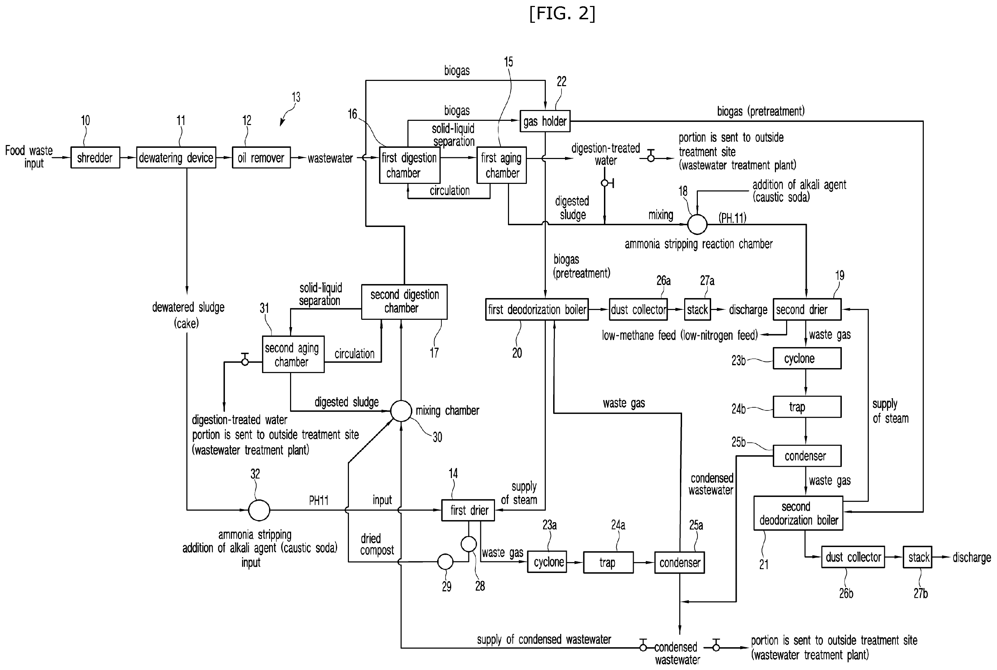

FIG. 2 is a schematic view illustrating a system for maximizing biogas production and minimizing process waste emission by pluralization of important facilities according to another embodiment of the disclosure.

As shown in FIG. 2, the system for maximizing biogas production and minimizing process waste emission by pluralization of important facilities includes a food waste pretreatment part 13 as means for pretreating food waste.

The food waste pretreatment part 13 includes a shredder 10, a dewatering device 11, an oil remover 12, and the like, which are arranged sequentially to treat food waste.

Here, the shredder 10 serves to shred food waste that has clumped together into lumps or similar forms, the dewatering device 11 serves to remove moisture from the food waste, and the oil remover 12 is a type of three-phase separator which serves to remove oil from the food waste.

Therefore, food waste brought in from outside passes sequentially through the shredder 10, the dewatering device 11, and the oil remover 12. Through this process, the food waste may be finely ground while the moisture and oil are removed from the food waste.

Organic sludge discharged from the dewatering device 11 passes through a stripping reaction chamber 32 and then is sent to a first drier 14 to be dried, while the wastewater discharged from the dewatering device 11 passes through the oil remover 12 and is then sent to a first digestion chamber 16 to be anaerobically digested.

Furthermore, the system for maximizing biogas production and minimizing process waste emission by pluralization of important facilities includes the pretreatment ammonia stripping reaction chamber 32 as means for performing ammonia stripping treatment on the organic sludge (dewatered sludge) discharged from the dewatering device 11 by raising the pH to 11 or higher in conjunction with the addition of an alkali agent.

The pretreatment ammonia stripping reaction chamber 32 serves to raise the pH of the organic sludge to 11 or higher through the addition of an alkali agent and agitation.

To this end, the organic sludge is input, together with an alkali agent (e.g., an alkali-based agent such as liquid caustic soda, an alkali metal compound, and an alkaline earth metal compound) having a concentration of about 1% to 5%, into the pretreatment ammonia stripping reaction chamber 32. The mixture of organic sludge and alkali agent input as above, i.e., a mixture with a pH of 11 or higher, undergoes dissolution, diffusion, and decomposition reactions in the pretreatment ammonia stripping reaction chamber 32 before being sent to the first drier 14.

For example, in the pretreatment ammonia stripping reaction chamber 32, the process of denitrifying the introduced organic sludge and the alkali-based agent is performed.

Specifically, the organic sludge and the alkali-based agent are input into and mixed in the pretreatment ammonia stripping reaction chamber 32. In this case, the internal conditions of the ammonia stripping reaction chamber 32 may be set to maintain not only high temperatures but also a strong alkaline state with a pH of 11 or higher.

Therefore, during the process of inputting the organic sludge into the pretreatment ammonia stripping reaction chamber 32, the alkali-based agent is input simultaneously. While the internal conditions of the pretreatment ammonia stripping reaction chamber 32 are maintained at a selected temperature and a strong alkaline state with a pH of 11 or higher, a mixing process of inducing physical changes through continuous rotational agitation is performed. Consequently, the nitrogen substances in the organic sludge are converted from the ammonium (NH₄+) ion state to ammonia (NH₃) in a short period of time through a degassing process, thereby reducing the total nitrogen content.

Here, the ammonia stripping process is a type of physicochemical method for removing nitrogen compounds from food waste, wastewater, ammonia, and a material containing large amounts of ammonium ions. The ammonia stripping process involves raising the pH to 11 or higher by inputting an alkali-based agent such as caustic soda and then maintaining a selected temperature, so that ammonia is reduced and degassed as nitrogen gas.

Furthermore, the system for maximizing biogas production and minimizing process waste emission by pluralization of important facilities includes the first dryer 14 as means for drying the organic sludge discharged from the dewatering device 11 of the food waste pretreatment part 13.

The first dryer 14 serves to dry the organic sludge discharged from the dewatering device 11, substantially the organic sludge discharged from the pretreatment ammonia stripping reaction chamber 32. The dried material from the first dryer 14 is then sent to a second digestion chamber 17, in which the dried material may be used for biogas production.

Furthermore, the exhaust gas discharged from the first drier 14, i.e. exhaust gas containing high-concentration N₂ gas, passes through a cyclone 23a and a trap 24a. During this process, impurities and oil in the exhaust gas are filtered out. The exhaust gas that has passed through the cyclone 23a and the trap 24a is sent to a condenser 25a to be cooled, sent to a first deodorization boiler 20 for deodorization treatment, and finally released into the atmosphere through a dust collector 26a, a stack 27a, and the like.

Here, a portion of the condensed wastewater discharged from the condenser 25a is sent to an external treatment site, while the remaining condensed wastewater is mixed with the dried material discharged from first dryer 14 and then sent together to the second digestion chamber 17 for treatment.

The system for maximizing biogas production and minimizing process waste emission by pluralization of important facilities further includes the first digestion chamber 16 as means for producing biogas by anaerobically digesting the wastewater discharged from the oil remover 12 of the food waste pretreatment part 13 and the digested sludge circulating in a first aging chamber 15.

The first digestion chamber 16 is a mesophilic digestion chamber in which the internal temperature is maintained at approximately 37°C to 42°C. In the first digestion chamber 16, both the digested sludge, which circulates between the first digestion chamber 16 and the first aging chamber 15, and the high-concentration organic wastewater, which is supplied from the oil remover 12 and from which oil has been removed, are anaerobically digested.

For example, when digested sludge and high-concentration organic wastewater are fed into the first digestion chamber 16, the digested sludge and the high-concentration organic wastewater remain within the digestion chamber for a selected period of time, for example, approximately 25 to 35 days, during which time the pH is maintained at approximately 7.0 to 7.6. Through this retention and fermentation process, the biogas generated accumulates in the top portion within the digestion chamber, the digestion-treated water accumulates in the upper layer of the water level within the chamber, and the heavy digested sludge accumulates in the lower layer within the chamber.

The biogas discharged from the first digestion chamber 16 is sent to the gas holder 22, while the digestion-treated water and digested sludge are each sent to the first aging chamber 15.

The system for maximizing biogas production and minimizing process waste emission by pluralization of important facilities further includes the second digestion chamber 17 as means for producing biogas by anaerobically digesting the dried material discharged from the first drier 14, the digested sludge circulating in the second aging chamber 31, and the condensed wastewater discharged from condensers 25a and 25b.

The second digestion chamber 17 is a mesophilic digestion chamber, the internal temperature of which is maintained at approximately 37°C to 42°C. In this second digestion chamber 17, the dried material supplied from the first drier 14, the digested sludge circulating between the second digestion chamber 17 and the second aging chamber 32, and a portion of the condensed wastewater discharged from the condensers 25a and 25b are anaerobically digested together.

For example, when the dried material, digested sludge, and condensed wastewater are fed into the second digestion chamber 17, the dried material, the digested sludge, and the condensed wastewater remain within the digestion chamber for a specified period of time, such as 25 to 35 days, while the pH of the mixture is maintained at approximately 7.0 to 7.6. Through this retention and fermentation process, the biogas generated accumulates in the top portion within the digestion chamber, the digestion-treated water accumulates in the upper layer of the water level within the chamber, and the heavier digested sludge accumulates in the lower layer within the chamber.

Then, the biogas discharged from the second digestion chamber 17 is sent to the gas holder 22, while the digestion-treated water and digested sludge are finally sent to the second aging chamber 31.

In particular, when the dried material is supplied from the first drier 14, the second digestion chamber 17 also receives the condensed wastewater generated from the exhaust gas discharged from the first drier 14, i.e. condensed wastewater produced through the exhaust gas condensation process in the condenser 25a, and the condensed wastewater generated from the exhaust gas discharged from the second drier 19, i.e. condensed wastewater produced through the exhaust gas condensation process in the condenser 25b. A result, the second digestion chamber 17 may perform anaerobic digestion on the dried material, the condensed wastewater, and the digested sludge which are mixed together.

At this point, the condensed wastewater discharged from the two condensers 25a and 25b through the respective lines converges into a single line. This condensed wastewater is then split again, with a portion being fed to the second digestion chamber 17, while the remainder is sent for treatment to a wastewater treatment plant, a wastewater treatment process, or the like.

In an example embodiment, the dried material supplied to the second digestion chamber 17, i.e., a dried material provided by the first dryer 14, undergoes grinding and screening, as well as mixing, in order to improve the efficiency of the digestion process before being sent to the second digestion chamber 17.

To this end, a grinder 28, a sorter 29, and a mixing chamber 30 are sequentially disposed on the dried material discharge line of the first drier 14, i.e., a line leading to the second digestion chamber 17. In this case, lines supplying the condensed wastewater produced through the exhaust gas condensation process in the condenser 25a, the condensed wastewater produced through the exhaust gas condensation process in the condenser 25b, and the digested sludge discharged from the second aging chamber 31 are connected to the mixing chamber 30, and the mixing chamber 30 is connected to the second digestion chamber 17.

Accordingly, the dried material discharged from the first drier 14 is ground to an appropriate size while passing through the grinder 28, sorted to an appropriate size while passing through the sorter 29, for example, a circular sorter, and then sent to the mixing chamber 30.

Thereafter, in the mixing chamber 30, the dried material transferred from sorter 29, the condensed wastewater sent from condensers 25a and 25b, and the digested sludge sent from the second aging chamber 31 are mixed. This mixture of dried material, condensed wastewater, and digested sludge is then sent to the second digestion chamber 17 for anaerobic digestion. Consequently, because the dried material that has undergone the grinding and sorting processes is subjected to anaerobic digestion within the second digestion chamber 17, the efficiency of the digestion process may further be enhanced.

The system for maximizing biogas production and minimizing process waste emission by pluralization of important facilities includes the first aging chamber 15 and the second aging chamber 31 as means for aging the digested sludge discharged from the first digestion chamber 16 and the second digestion chamber 17 while circulating the digested sludge to and from the first digestion chamber 16 and the second digestion chamber 17, respectively.

The first aging chamber 15 and the second aging chamber 31 serve to retain the digested sludge, filtrate, and the like discharged from the first digestion chamber 16 and the second digestion chamber 17 for a selected period of time, thereby performing fermentation and aging as well as solid-liquid separation.

Furthermore, the digested sludge undergoes fermentation and aging processes while being continuously circulated between the first aging chamber 15 and the first digestion chamber 16 and between the second aging chamber 31 and the second digestion chamber 17 for a selected period of time. As a result, the repeated fermentation and aging processes may maximize biogas production.

The digested sludge discharged after the aging processes in the first aging chamber 15 and the second aging chamber 31 is sent to an ammonia stripping reaction chamber 18 and a mixing chamber 30. In addition, a portion of the digestion-treated water discharged from the first aging chamber 15 is sent to the ammonia stripping reaction chamber 18 for use, while the remainder is sent to a wastewater treatment plant or the like for treatment. Furthermore, the digestion-treated water discharged from the second aging chamber 31 is sent to a wastewater treatment plant or the like for treatment.

In addition, the system for maximizing biogas production and minimizing process waste emission by pluralization of important facilities includes the ammonia stripping reaction chamber 18 as means for performing ammonia stripping treatment on the digested sludge discharged from the first aging chamber 15 in conjunction with the addition of an alkali agent to raise the pH to 11 or higher.

The ammonia stripping reaction chamber 18 serves to raise the pH of the digested sludge and the digestion-treated water, which are input together, to 11 or higher through the addition of an alkali agent and agitation.

To this end, the digested sludge and the digestion-treated water, together with an alkali agent (e.g., an alkali-based agent such as liquid caustic soda, an alkali metal compound, and an alkaline earth metal compound) at a concentration of about 1% to 5%, are input into the ammonia stripping reaction chamber 18. The mixture of added digested sludge, digestion-treated water, and alkali agent, i.e., a mixture with a pH of 11 or higher, undergoes dissolution, diffusion, and decomposition reactions in the ammonia stripping reaction chamber 18 before being sent to the second drier 19

For example, in the ammonia stripping reaction chamber 18, a denitrification process is performed on the digested sludge, digestion-treated water, and alkali-based agent input thereinto.

Specifically, the digested sludge, digestion-treated water, and alkali-based agent are input into and mixed in the ammonia stripping reaction chamber 18. In this case, the internal conditions of the ammonia stripping reaction chamber 18 may be set to maintain not only high temperatures but also a strong alkaline state with a pH of 11 or higher.

Therefore, during the process of inputting the digested sludge and digestion-treated water into the ammonia stripping reaction chamber 18, an alkali-based agent is input simultaneously. While the internal conditions of the ammonia stripping reaction chamber 18 are maintained at a selected temperature and a strong alkaline state with a pH of 11 or higher, a mixing process of inducing physical changes through continuous rotational agitation is performed. Consequently, the nitrogen content in the digested sludge and digestion-treated water are converted from the ammonium (NH₄+) ion state to ammonia (NH₃) in a short period of time through a degassing process, thereby reducing the total nitrogen content.

Here, the ammonia stripping process is a type of physicochemical method for removing nitrogen compounds from food waste, wastewater, ammonia, and a material containing large amounts of ammonium ions. The ammonia stripping process involves raising the pH to 11 or higher by adding an alkali-based agent such as caustic soda and then maintaining a selected temperature, so that ammonia is reduced and degassed as nitrogen gas.

Furthermore, the system for maximizing biogas production and minimizing process waste emission by pluralization of important facilities includes the second dryer 19 as means for drying the digested sludge discharged from the ammonia stripping reaction chamber 18.

In this second drier 19, not only the drying process of the digested sludge but also the ammonia stripping reaction may continue, thereby enabling denitrification.

For example, a mixture of digested sludge, digestion-treated water, and alkali-based agent is input into the second drier 19, in which the drying conditions within the second drier 19 may maintained at a high temperature and in a strong alkaline state with a pH of 11 or higher.

Therefore, by performing the drying process of inducing physical changes by performing continuous rotary agitation drying while maintaining the internal drying conditions of the second dryer 19 at a strong alkaline state with a pH of 11 or higher, the total nitrogen substances contained in the dried digested sludge may be removed.

In this case, the ammonia (NH₃) removed from the dried material through the stripping process within the second drier 19 may be sent, together with the drier exhaust gas, to a second deodorization boiler 21 for treatment, and the dried material discharged from the second drier 19, which contains low-concentration total nitrogen substances, may be used as animal feed, compost, solid fuel, or the like.

Specifically, the denitrified dry material discharged from the second dryer 19 (e.g., organic dry feed containing low-concentration total nitrogen substances), i.e., low-methane feed (low-nitrogen feed), may undergo grinding and sorting processes before being sold as compost or solid fuel.

The exhaust gas discharged from the second drier 19, i.e., -exhaust gas containing high-concentration N₂, passes through a cyclone 23b and a trap 24b, in which impurities and oil are filtered out from the exhaust gas. The exhaust gas that has passed through the cyclone 23b and the trap 24b is sent to the condenser 25b to be cooled, sent to the second deodorization boiler 21 to be deodorized, and then released into the atmosphere through a dust collector 26b and a stack 27b.

Furthermore, the system for maximizing biogas production and minimizing process waste emission by pluralization of important facilities includes the first deodorization boiler 20 and the second deodorization boiler 21 as means for incinerating waste gas containing malodorous gases.

The first extraction boiler 20 is disposed on the exhaust gas discharge line of the first drier 14 to incinerate the exhaust gas discharged from the first drier 14.

The second deodorization boiler 21 is disposed on the exhaust gas discharge line of the second drier 19 to incinerate the exhaust gas discharged from the second drier 19.

The exhaust gas incinerated in the first deodorization boiler 20 and the second deodorization boiler 21 is purified through the dust collectors 26a and 26b and the stacks 27a and 27b before being released into the atmosphere.

In an example embodiment, the disclosure provides a system able to use the biogas produced in the first digestion chamber 16 and the second digestion chamber 17 as fuel for operating the facilities.

To this end, gas transfer lines are connected to the first digestion chamber 16 and the first deodorization boiler 20 and to the second digestion chamber 17 and the second deodorization boiler 21, respectively, and a gas holder 22 is disposed on the lines connected in this manner.

Consequently, the biogas discharged from the first digestion chamber 16 and the second digestion chamber 17 is collected and pretreated in the gas holder 22, and then supplied to the first deodorization boiler 20 and the second deodorization boiler 21, respectively, to be used as fuel.

By using biogas produced in-house by the digestion chambers as fuel for facility operation, energy costs may be significantly reduced.

Furthermore, steam transfer lines are connected to the first deaeration boiler 20 and the first drier 14 and to the second deaeration boiler 21 and the second drier 19, respectively, and steam generated in the first dehumidification boiler 20 and the second dehumidification boiler 21 is supplied to the first drier 14 and the second drier 19 through the lines, respectively, to be used as a heat source for the driers.

Therefore, the overall food waste treatment process of the system for maximizing biogas production and minimizing process waste emission by pluralization of important facilities configured as above will be described as follows.

As the food waste passes sequentially through the shredder 10, the dewatering device 11, and the oil remover 12 in the food waste pretreatment part 13, the food waste is finely shredded, and moisture, oil, and other substances are removed from the food waste.

The organic sludge discharged from the dewatering device 11 passes through the pretreatment ammonia stripping reaction chamber 32 before being input into the first dryer 14 to be dried. The dried material is then input into the second digestion chamber 17 after being mixed with condensed wastewater. At the same time, the high-concentration wastewater discharged from the oil remover 12 is input into the first digestion chamber 16.

At this point, the exhaust gas discharged from the first dryer 14 is released into the atmosphere after odors and other contaminants have been removed in the first deodorization boiler 20.

In the first digestion chamber 16 and the second digestion chamber 17, biogas is produced through anaerobic digestion. This biogas is collected in the gas holder 22 and then supplied to the first deodorization boiler 20 and the second deodorization boiler 21 to be used as fuel. The digested sludge and the digestion-treated water discharged from the first digestion chamber 16 and the second digestion chamber 17 are aged in the first aging chamber 15 and the second aging chamber 32, respectively, and then input into the ammonia stripping reaction chamber 18 and the mixing chamber 30, respectively.

In addition, the exhaust gas emitted from the second dryer 19 is released into the atmosphere after odors and other contaminants have been removed in the deodorizing boiler 19.

In the ammonia stripping reaction chamber 18, a mixture of digested sludge and digestion-treated water with minimized nitrogen content is produced through the ammonia stripping process. The mixture produced in this manner is input into the second drier 19 to be dried. The high-quality low-nitrogen dried material discharged from the second drier 19 is sold as animal feed, compost, or the like. In addition, the exhaust gas discharged from the second dryer 19 is released into the atmosphere after odors and other contaminants have been removed in the second deodorization boiler 21.

As described above, the biogas (methane) generated when high-concentration organic wastewater is input into and treated in the first digestion chamber 16 before being supplied as fuel to the first deodorization boiler 20 after pretreatment, and the steam generated in the first deodorization boiler 20 is supplied as a heat source to the first dryer 14 which dries the organic sludge.

The organic dried material discharged after dried in the first drier 14 is mixed at a selected ratio with the condensed wastewater generated during the condensation of exhaust gas from the first drier 14 and the second drier 19 and the digested sludge discharged from the aging chamber 31, and the resultant mixture is input into the second digestion chamber 17 to be anaerobically digested.

Furthermore, the biogas generated after digestion in the second digestion chamber 17 and the biogas generated after digestion in the first digestion chamber 16 are collected in the gas holder 22. The resultant biogas supplied to the gas holder 22 is pretreated before being used as fuel for the first deodorization boiler 20 and the second deodorization boiler 21. The remaining biogas may be processed to improve the quality and converted into city gas to be sold or supplied as fuel to a power generator to generate electricity, which may also be sold.

After the digestion-treated water discharged from the first digestion chamber 16 and the second digestion chamber 17 is subjected to solid-liquid separation in the first aging chamber 15 and the second aging chamber 31, the anaerobic digested sludge circulates while being returned to the first digestion chamber 16 and the second digestion chamber 17. The excess digested sludge discharged from the first aging chamber 15 enters the ammonia stripping reaction chamber 18 together with a selected proportion of the digestion-treated water. The resultant mixture is thoroughly agitated in alkaline conditions (pH 11 or higher) to degas ammonia (NH₃) gas and then input into and dried in the second drier 19.

The excess digested sludge discharged from the second aging chamber 31 is sent to the mixing chamber 30 and then forwarded to the second digestion chamber 17.

The high-quality organic dried material discharged from the second dryer 19 is used as a compost raw material while containing low-nitrogen components. The condensed wastewater discharged during the exhaust gas condensation process of the second dryer 19, i.e., the condensed wastewater containing low-nitrogen components, is resupplied as mixing water to the first dryer 14.

Furthermore, the waste gas generated in the second dryer 19 is incinerated in the second deodorization boiler 21 to remove odorous gases, and the steam generated using biogas fuel is supplied as a heat source to the second dryer 19.

Therefore, the system configuration of the aforementioned series of treatment processes can be used to treat high-concentration organic wastewater in two stages to maximize the production of biogas, which is a renewable energy source. The biogas can be supplied as fuel for on-site deodorization boilers, and surplus biogas may be upgraded high quality and sold, thereby generating profits. At the same time, the discharge of process wastes generated during treatment may be minimized, thereby reducing greenhouse gas emissions. This can not only contribute positively to improving the global environment but also reduce high waste disposal costs.

## Claims

1. A system for maximizing biogas production and minimizing process waste emission by pluralization of important facilities, the system comprising:
a shredder for shredding food waste;
a dewatering device for dewatering the food waste;
a food waste pretreatment part comprising an oil remover for removing oil from the food waste;
a first drier for drying organic sludge discharged from the dewatering device of the food waste pretreatment part;
a first digestion chamber for performing anaerobic digestion on wastewater discharged from the oil remover of the food waste pretreatment part and digested sludge circulating in a first aging chamber to generate biogas;
a second digestion chamber for performing anaerobic digestion on a dried material discharged from the first drier and the digested sludge circulating in the first aging chamber to generate biogas;
the first aging chamber for aging the digested sludge discharged from the first digestion chamber while circulating the digested sludge to and from the first digestion chamber;
a second aging chamber for aging the digested sludge discharged from the second digestion chamber while circulating the digested sludge to and from the second digestion chamber;
an ammonia stripping reaction chamber for performing ammonia stripping treatment on the digested sludge discharged from the first aging chamber by adding an alkali agent so that the pH of the digested sludge is raised to 11 or higher;
a second drier for drying the digested sludge discharged from the ammonia stripping reaction chamber;
a first deodorization boiler for incinerating waste gas discharged from the first drier; and
a second deodorization boiler for incinerating waste gas discharged from the second drier.

2. The system of claim 1, further comprising a gas holder for collecting and pretreating the biogas generated from the first digestion chamber and the biogas generated from the second digestion chamber and supplying the pretreated biogas to the first deodorization boiler and the second deodorization boiler as fuel.

3. The system of claim 1, wherein the first drier and the second drier receive steam from the first deodorization boiler and the second deodorization boiler, respectively, to use the steam as a heat source.

4. The system of claim 1, wherein the ammonia stripping reaction chamber receives a portion of the digestion-treated water discharged from the first aging chamber and the second aging chamber, mixes the digested sludge and the received portion of the digestion-treated water, and performs ammonia stripping on the mixture.

5. The system of claim 1, wherein the second digestion chamber receives a portion of condensed wastewater generated from the waste gas discharged from the first drier and the second drier, mixes the portion of condensed wastewater with the dried material, and performs anaerobic digestion on the mixture.

6. The system of claim 1, further comprising:
a grinder for grinding the dried material discharged from the first drier;
a sorter for sorting the dried material; and
a mixing chamber for mixing the dried material discharged from the sorter with the condensed wastewater discharged from a condenser and transferring the mixture to the second digestion chamber.

7. A system for maximizing biogas production and minimizing process waste emission by pluralization of important facilities, the system comprising:
a shredder for shredding food waste;
a dewatering device for dewatering the food waste;
a food waste pretreatment part comprising an oil remover for removing oil from the food waste;
a first drier for drying organic sludge discharged from the dewatering device of the food waste pretreatment part;
a first digestion chamber for performing anaerobic digestion on wastewater discharged from the oil remover of the food waste pretreatment part and digested sludge circulating in a first aging chamber to generate biogas;
a second digestion chamber for performing anaerobic digestion on a dried material discharged from a second aging chamber and the digested sludge circulating in the second aging chamber to generate biogas;
a first aging chamber for aging the digested sludge discharged from the first digestion chamber while circulating the digested sludge to and from the first digestion chamber;
the second aging chamber for aging the digested sludge discharged from the second digestion chamber while circulating the digested sludge to and from the second digestion chamber;
an ammonia stripping reaction chamber for performing ammonia stripping treatment on the digested sludge discharged from the first aging chamber by adding an alkali agent to raise a pH of the digested sludge to 11 or higher;
a second drier for drying the digested sludge discharged from the ammonia stripping reaction chamber;
a first deodorization boiler for incinerating waste gas discharged from the first drier;
a second deodorization boiler for incinerating waste gas discharged from the second drier;
a grinder for grinding the dried material discharged from the first drier;
a sorter for sorting the dried material; and
a mixing chamber for mixing the dried material discharged from the sorter with the condensed wastewater discharged from a condenser and transferring the mixture to the second digestion chamber.

8. The system of claim 7, further comprising a gas holder for collecting and pretreating the biogas generated from the first digestion chamber and the biogas generated from the second digestion chamber and supplying the pretreated biogas to the first deodorization boiler and the second deodorization boiler as fuel.

9. The system of claim 7, wherein the first drier and the second drier receive steam from the first deodorization boiler and the second deodorization boiler, respectively, to use the steam as a heat source.

10. The system of claim 7, wherein the ammonia stripping reaction chamber receives a portion of the digestion-treated water discharged from the first aging chamber, mixes the digested sludge and the received portion of the digestion-treated water, and performs ammonia stripping on the mixture.

11. The system of claim 7, wherein the second digestion chamber receives a portion of condensed wastewater generated from the waste gas discharged from the first drier and the second drier, mixes the portion of condensed wastewater with the dried material, and performs anaerobic digestion on the mixture.

12. The system of claim 7, further comprising a pretreatment ammonia stripping reaction chamber disposed between the dewatering device and the first drier and configured to perform ammonia stripping treatment on the organic sludge discharged from the dewatering device by adding an organic sludge so that the pH of the organic sludge is raised to 11 or higher.
